# EUROPÄISCHE PATENTANMELDUNG

(11) **EP 1 953 441 A2**
(43) Veröffentlichungstag der Anmeldung: **06.08.2008**
(21) Anmeldenummer: 08000594.5
(22) Anmeldetag: 14.01.2008
(51) Int. Cl.: F16L 33/207

(54) **Rohrleitung mit einem Anschlussstück**

(30) Priorität: 03.02.2007 DE 102007005506
(71) Anmelder: LuK Lamellen und Kupplungsbau Beteiligungs KG, 77815 Bühl (DE)
(72) Erfinder: Ellert, Alexander, 67480 Roeschwoog (FR); Leger, Frédéric, 28140 Terminiers (FR); Lecointre, Jean-Michel, 45450 Donnery (FR)

(57) **Zusammenfassung**

Rohrleitung (1) mit einem Anschlussstück (2) zur Verbindung der Rohrleitung (1) mit einem Schlauch, wobei das Anschlussstück (2) mindestens einen ersten, im Längsschnitt trapezförmigen Ring (3.1) sowie einen Anschlagring (8) umfasst, wobei zwischen dem ersten Ring (3.1) und dem Anschlagring (8) mindestens ein weiteres Mittel (3.2,12) zur Herstellung einer form- oder kraftschlüssigen Verbindung zwischen Schlauch und Anschlussstück (2) angeordnet ist.

## Beschreibung

Die vorliegende Erfindung betrifft eine Rohrleitung mit einem Anschlussstück zur Verbindung der Rohrleitungen mit einem Schlauch, wobei das Anschlussstück mindestens einen ersten im Längsschnitt trapezförmigen Ring sowie einen Anschlagring umfasst. Die Erfindung betrifft des Weiteren ein Anschlussstück zur Verbindung einer Rohrleitung mit einem Schlauch, wobei das Anschlussstück mindestens einen ersten im Längsschnitt trapezförmigen Ring sowie einen Anschlagring umfasst.

Rohrleitungen in hydraulischen oder pneumatischen Systemen werden oftmals aus einer Abfolge von Metallrohren und Kunststoffschläuchen ausgeführt. Metallrohre sind nur sehr eingeschränkt flexibel, weisen dafür aber eine sehr hohe Drucksteifigkeit auf. Mit Drucksteifigkeit ist hier die Volumenänderung bei Druckerhöhung gemeint. Große Druckänderungen bewirken bei Metallrohren daher nur geringe Volumenänderungen der hydraulischen Strecke. Bei flexiblen meist aus Kunststoff hergestellten Schläuchen verhält sich dies genau umgekehrt, diese sind flexibel verlegbar, weisen dafür aber eine gegenüber Metallrohren geringe hydraulische Steifigkeit auf. Die wechselweise Abfolge von Metallrohren und Kunststoffschläuchen ermöglicht hier streckenweise die Ausnutzung der jeweiligen Vorteile von Metallrohren bzw. flexiblen Schläuchen. In jedem Fall ist es beim Übergang eines Rohres auf einen Schlauch notwendig, beide miteinander zu verbinden. Dazu haben sich so genannte Tannenbaumverbindungen als geeignet erwiesen. Diese umfassen auf der Rohrseite ein Anschlussstück, das einen oder mehrere trapezförmige Ringe aufweist, deren maximaler Außendurchmesser geringfügig größer ist als der Innendurchmesser des Schlauches, so dass sich hier bereits eine Übergangs- oder Presspassung ergibt. Der Schlauch wird über das Anschlussstück geschoben und mittels einer Schlauchschelle oder vorzugsweise einer Schlauchhülse zusätzlich gesichert. Dazu wird die Schlauchhülse plastisch so verformt, dass der Schlauch zwischen dem Anschlussstück und der Schlauchhülse eingequetscht wird.

Eine Aufgabe der vorliegenden Erfindung ist es, derartige Anschlussstücke zur Verbindung eines Rohres mit einem Schlauch zu verbessern. Dabei soll insbesondere die Montage erleichtert werden. Zusätzlich soll die Druckdichtigkeit der Verbindung erhöht werden.

Dieses Problem wird gelöst durch eine Rohrleitung mit einem Anschlussstück zur Verbindung der Rohrleitung mit einem Schlauch, wobei das Anschlussstück mindestens einen ersten im Längsschnitt trapezförmigen Ring sowie einen Anschlagring umfasst, wobei zwischen dem ersten Ring und dem Anschlagring mindestens ein weiteres Mittels zur Herstellung einer form- oder kraftschlüssigen Verbindung zwischen Schlauch und Anschlussstück angeordnet ist. Das Mittel zur Herstellung der form- oder kraftschlüssigen Verbindung bewirkt gleichzeitig eine Dichtwirkung zwischen Schlauch und Rohrleitung. Zusätzlich kann vorgesehen sein, dass mindestens ein weiteres Mittel zur Herstellung der form- oder kraftschlüssigen Verbindung zwischen Schlauch und Anschlussstück zwischen dem ersten Ring und einer Vorderkante der Rohrleitung angeordnet ist. Die weiteren Mittel werden also beiderseits des ersten Ringes angeordnet. Vorzugsweise ist vorgesehen, dass das weitere Mittel einen Bereich des Anschlussstückes mit gestuftem Außendurchmesser umfasst. Mit gestuftem Außendurchmesser ist hier eine Veränderung des Außendurchmessers über der axialen Länge des Anschlussstückes gemeint. Diese kann insbesondere sprungartige Veränderungen des Durchmessers aufweisen.

Das weitere Mittel ist vorzugsweise ein Ring, dessen größter Außendurchmesser kleiner als der größte Außendurchmesser des ersten Ringes ist. Alternativ kann das weitere Mittel ein Ring mit einem kreisbogenförmigen oder ellipsenbogenförmigen Querschnitt oder eine Ringnut sein. Die weiteren Mittel weisen also jeweils veränderliche oder abgestufte Außendurchmesser auf, in die der Schlauch plastisch oder elastisch eingedrückt werden kann. Der maximale Außendurchmesser der weiteren Mittel zur Herstellung der form- oder kraftschlüssigen Verbindung zwischen Schlauch und Anschlussstück weist einen geringeren Durchmesser als der erste im Längsschnitt trapezförmige Ring auf. Dadurch kann der Schlauch relativ leicht in axialer Richtung über das Anschlussstück geschoben werden.

In einer Weiterbildung der vorliegenden Erfindung ist vorgesehen, dass die Ringnute sowie die Ringe jeweils in axialer Richtung abwechselnd angeordnet sind, indem das weitere Mittel sowohl mindestens einen Ring, dessen größter Außendurchmesser kleiner als der größte Außendurchmesser des ersten Ringes ist, umfasst als auch mindestens eine Ringnut umfasst.

Das eingangs genannte Problem wird auch gelöst durch eine Anschlussstück zur Verbindung einer Rohrleitung mit einem Schlauch, wobei das Anschlussstück mindestens einen ersten im Längsschnitt trapezförmigen Ring sowie einen Anschlagring umfasst, wobei zwischen dem ersten Ring und dem Anschlagring mindestens ein weiteres Mittel zur Herstellung einer form- oder kraftschlüssigen Verbindung zwischen Schlauch und Anschlussstück angeordnet ist.

Im Folgenden werden Ausführungsbeispiele der Erfindung anhand der beiliegenden Zeichnungen erläutert. Dabei zeigen:
- Fig. 1: einen Ausschnitt aus einer Hydraulikleitung mit einem Anschlussstück nach Stand der Technik;
- Fig. 2: eine erstes Ausführungsbeispiel einer Hydraulikleitung mit einem erfindungsgemäßen Anschlussstück;
- Fig. 3: ein zweites Ausführungsbeispiel einer Hydraulikleitung mit einem erfindungsgemäßen Anschlussstück;
- Fig. 4: eine Schlauchverbindung im Schnitt unter Verwendung eines Anschlussstückes gemäß Fig. 2 bei einer Quetscherverbindung mit zwei Quetschstellen;
- Fig. 5: eine Schlauchverbindung gemäß Fig. 4 bei Verwendung von drei Quetschstellen;
- Fig. 6: eine Schlauchverbindung unter Verwendung eines Anschlussstückes gemäß Fig. 3 bei zwei Quetschstellen;
- Fig. 7: eine Schlauchverbindung gemäß Fig. 6 unter Verwendung von drei Quetschstellen;
- Fig. 8: ein drittes Ausführungsbeispiel einer Hydraulikleitung mit einem erfindungsgemäßen Anschlussstück;
- Fig. 9: eine Schlauchverbindung im Schnitt unter Verwendung eines Anschlussstückes gemäß Fig. 8 bei einer Quetscherverbindung mit zwei Quetschstellen;
- Fig. 10: eine Schlauchverbindung im Schnitt unter Verwendung eines vierten Ausführungsbeispiels eines Anschlussstückes bei einer Quetscherverbindung mit drei Quetsch stellen.

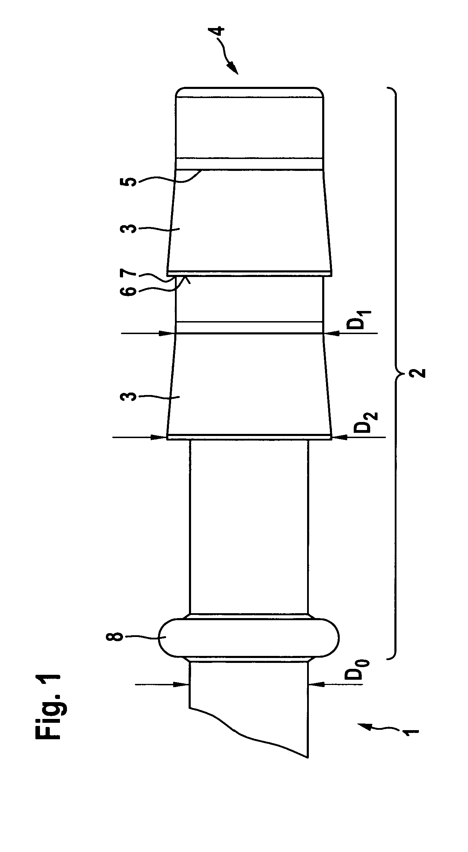

Fig. 1 zeigt ein Ende einer Hydraulikleitung 1 mit einem Ausführungsbeispiel eines Anschlussstückes 2 nach Stand der Technik. Die Hydraulikleitung 1 ist vorzugsweise aus Metall gefertigt, kann aber ebenso aus einem Kunststoff gefertigt sein. Die Hydraulikleitung 1 wird vermittels des Anschlussstückes 2 verbunden mit einem elastischen Schlauch, der hier nicht dargestellt ist, indem der Schlauch über das Anschlussstück 2 geschoben wird und vermittels einer nicht dargestellten Schlauchhülse, die üblicherweise aus einem plastisch verformbaren Metall besteht, mittels Quetschverbindungen an dem Anschlussstück 2 gesichert wird. Es wird auf diese Weise eine teilweise reibschlüssige und teilweise formschlüssige Verbindung zwischen der Hydraulikleitung 1 und dem flexiblen Schlauch hergestellt. Das Anschlussstück 2 umfasst zwei erhabene Ringe 3, die im Querschnitt trapezförmig sind, wobei der einer Vorderseite 4 der Hydraulikleitung 1 zugewandte kleinere Durchmesser des Ringes 3 dem Außendurchmesser der Hydraulikleitung 1, dieser ist mit D₀ bezeichnet, entspricht oder geringfügig größer ist und der der Vorderseite abgewandte größere Durchmesser D₂ größer als der Außendurchmesser D₀ der Hydraulikleitung ist. Der im Querschnitt trapezförmige Ring 3 bildet somit an der der Vorderseite abgewandten Seite 6 eine Kante 7. Im Ausführungsbeispiel der Fig. 1 sind zwei Ringe 3 hintereinander angeordnet. Die Ringe 3 können entweder als gesonderte Teile auf die Hydraulikleitung 1 aufgeschoben und mit dieser verbunden sein, z.B. indem diese mit der Hydraulikleitung 1 verpresst, verlötet oder verschweißt sind, oder können z.B. durch Rundhämmern oder dergleichen aus der Hydraulikleitung 1 herausgearbeitet sein, wobei dann die Hydraulikleitung 1 und die Ringe 3 einstückig sind. Auf der der Vorderkante 4 abgewandten Seite ist an der Hydraulikleitung 1 ein Anschlagring 8 angeordnet, der den Weg begrenzt, um den der hier nicht dargestellte Schlauch auf das Anschlussstück 2 aufgeschoben werden kann. Der Schlauch stößt dabei mit seiner Vorderkante an den Anschlagring 8 an. Zusätzlich dient der Anschlagring 8 der Fixierung der hier nicht dargestellten Schlauchhülse.

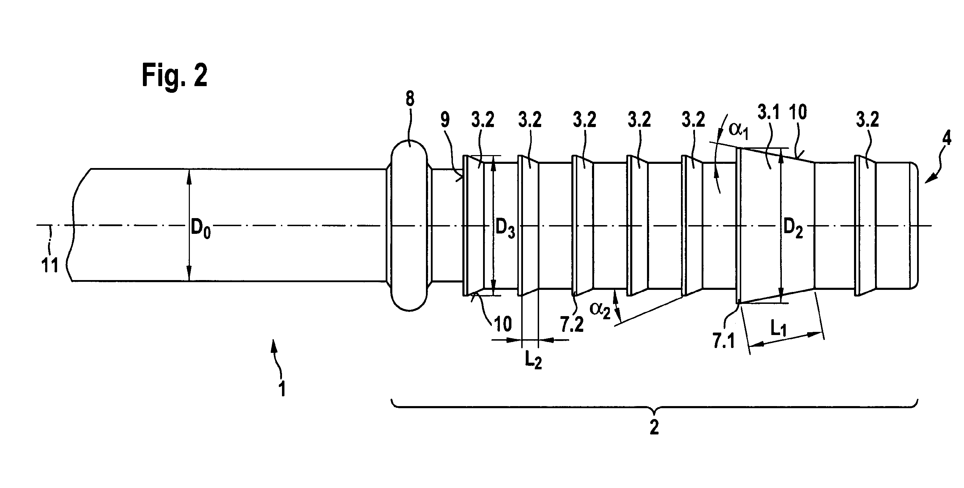

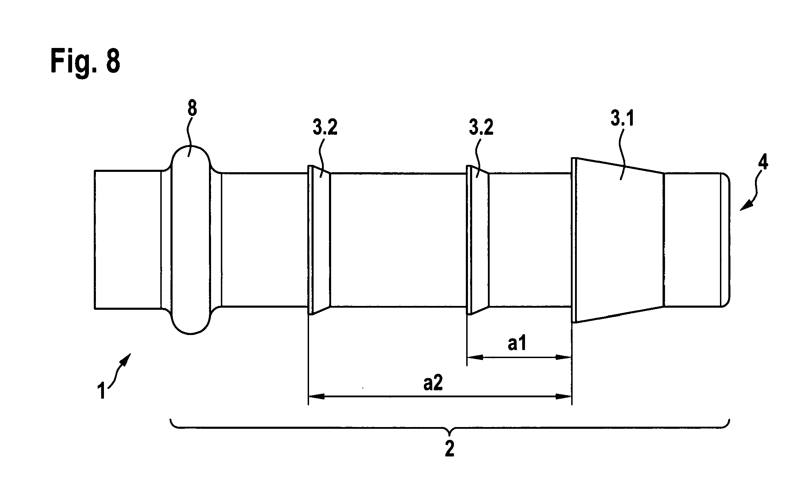

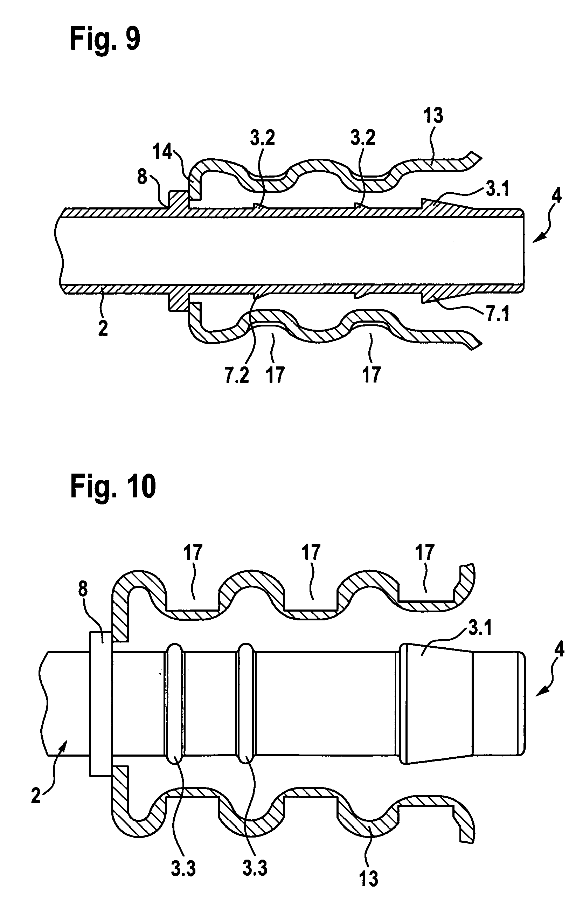

Fig. 2 zeigt ein erstes Ausführungsbeispiel eines erfindungsgemäßen Anschlussstückes 2. Dieses umfasst einen ersten Ring 3.1, der identisch mit dem Ring 3 gemäß Stand der Technik ist. Zusätzlich zu dem ersten Ring 3.1 sind weitere Ringe 3.2 in axialer Richtung der Hydraulikleitung 1 gesehen vor und hinter dem Ring 3.1 angeordnet. Der erste Ring 3.1 hat einen maximalen Außendurchmesser D₂ an der der Vorderseite 4 abgewandten Seite 6 des Ringes. Die Ringe 3.2 weisen einen größeren Außendurchmesser D₃ als der Außendurchmesser D₀ der Hydraulikleitung an einer der Vorderseite 4 der Hydraulikleitung abgewandten Seite 9 auf, wobei der Außendurchmesser D₃ kleiner ist als der Außendurchmesser D₂ des Ringes 3.1. Im vorliegenden Ausführungsbeispiel ist ein weiterer Ring 3.2 mit kleinerem Außendurchmesser D₃ als der erste Ring 3.1 in Richtung der Vorderseite 4 der Hydraulikleitung 1 vor dem Ring 3.1 angebracht und fünf weitere Ringe 3.2 sind zwischen dem ersten Ring 3.1 und dem Anschlagring 8 angeordnet. Der im Querschnitt trapezförmige Ring 3.1 bildet an der der Vorderseite abgewandten Seite eine Kante 7.1, die im Querschnitt trapezförmigen Ringe 3.2 bilden an der der Vorderseite abgewandten Seite jeweils eine Kante 7.2. Die kegelförmigen Außenflächen 10 der Ringe 3.1 und 3.2 sind jeweils um einen Winkel α bezüglich der Rotationsachse 11 der Hydraulikleitung 1 geneigt. Bei dem Ring 3.1 ist deren Winkel α₁ kleiner als der entsprechende Winkel a₂ bei den Ringen 3.2. Der Ring 3.1 weist eine axiale Länge L₁ auf, diese ist größer als die entsprechende axiale Länge L₂ der Ringe 3.2. In Fig. 8 ist ein weiteres Ausführungsbeispiel dargestellt, das zwei Ringe 3.2 zwischen dem ersten Ring 3.1 und dem Anschlagring 8 aufweist. Die Abstände a1 bzw. a2 der Ringe 3.1 zu dem ersten Ring 3.1 können dabei variiert werden um eine möglichst dichte und haltbare Verbindung Schlauchverbindung wie in Fig. 9 dargestellt zu erhalten.

Anschlussstücke 2 gemäß Stand der Technik wie in Fig. 1 dargestellt und gemäß den erfindungsgemäßen Ausführungsbeispielen werden gemeinhin auch als Tannenbaumnippel bezeichnet.

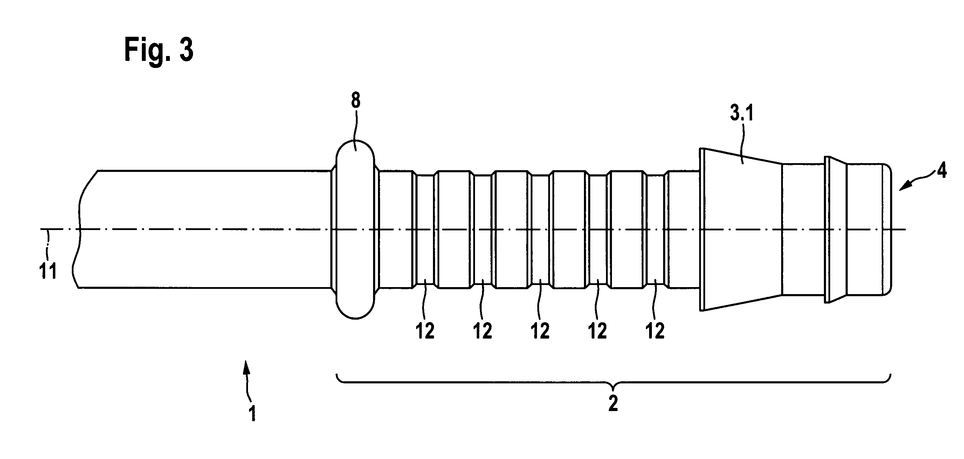

Fig. 3 zeigt ein zweites Ausführungsbeispiel eines erfindungsgemäßen Anschlussstückes 2. Die Ringe 3 sind dabei ersetzt durch umlaufende Ringnute 12. Die Ringnute 12 sind hier nur zwischen dem Anschlagring 8 und dem Ring 3 angeordnet. Im vorliegenden Beispiel sind fünf Ringnute 12 dort angeordnet, diese Anzahl kann aber ebenso wie die Anzahl der Ringe 3.2 gemäß dem Ausführungsbeispiel der Fig. 2 variiert werden.

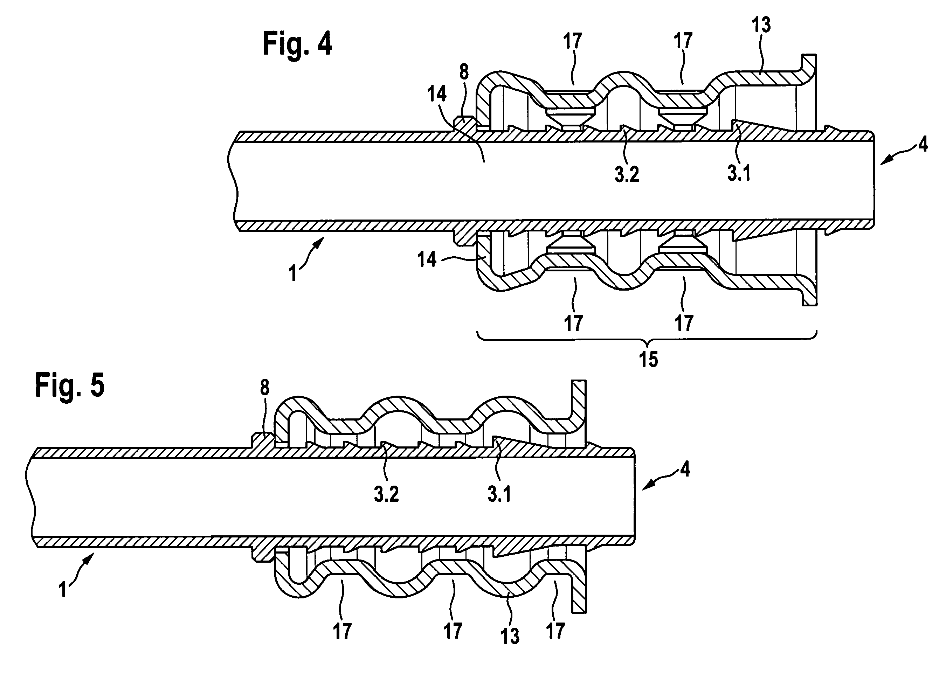

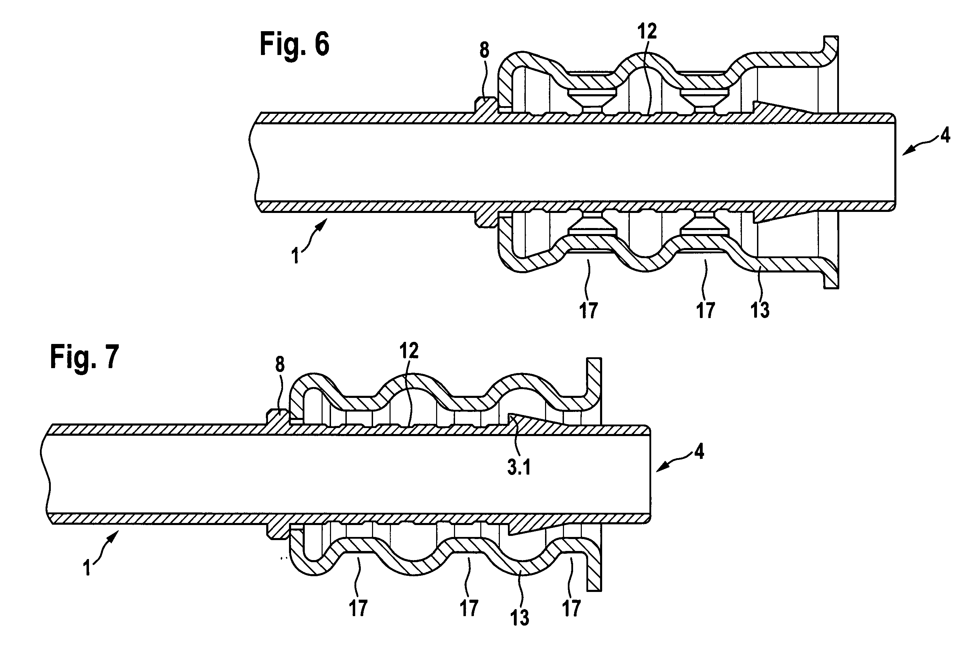

Die Fig. 4 bis 7 sowie 9 und 10 zeigen Schnittdarstellungen von Schlauchverbindungen unter Verwendung erfindungsgemäßer Anschlussstücke 2. Es handelt sich bei den Fig. 4 bis 7 sowie 9 und 10 jeweils um Schnittdarstellungen durch die Hydraulikleitung 1, das Anschlussstück 2 sowie eine Schlauchhülse 13. Nicht dargestellt ist der zwischen Schlauchhülse 13 und Anschlussstück 2 angeordnete und zwischen beiden eingeklemmte Schlauch. Die Schlauchhülse 13 ist im unverformten Zustand, also bevor die Verbindung zwischen Schlauch und Hydraulikleitung 1 durch Verformen der Schlauchhülse 13 hergestellt wurde, im Wesentlichen ein becherförmiges Teil mit einem hohlzylindrischen Teil 15, der an einer Seite in eine Lochblende 16 mit einer Bohrung 14 übergeht. Die Schlauchhülse 13 wird über den Schlauch gesteckt und mit diesem zusammen auf das Anschlussstück 2 geschoben. Die Verbindung wird hergestellt, indem Kerben 17 mittels eines entsprechenden Werkzeuges in die Schlauchhülse 13 gequetscht werden. Die Kerben 17 können entweder jeweils gegenüberliegende Kerben sein oder können so aneinandergereiht werden, dass diese eine Ringnut ergeben. Vermittels der Kerben 17 wird der Schlauch auf das Anschlussstück 2 gepresst und bei Ringen 3.1 zwischen dem Ring 3 und dem Anschlagring 8 um die Kanten 7.1 bzw. 7.2 herumgepresst, sodass sich eine formschlüssige Verbindung zwischen Schlauch und Hydraulikleitung 1 ergibt bzw. beim Ausführungsbeispiel des Anschlussstückes 2 gemäß Fig. 3 in die Ringnute 12 gepresst. In den Fig. 4 und 6 sind jeweils Quetschverbindungen mit zwei Kerben 17 dargestellt, in den Fig. 5 und 7 sind jeweils Quetschverbindungen mit drei Kerben 17 dargestellt.

Die in Fig. 9 dargestellte Schlauchverbindung ist unter Verwendung des Anschlussstückes 2 gemäß Fig. 8 hergestellt. Die Kerben 17 sind dabei so angeordnet, dass sich diese im Bereich der Kanten 7.2 der Ringe 3.2 befinden, sodass der zwischen der Schlauchhülse 13 und dem Anschlussstück 2 angeordnete Schlauch auf die Ringe 3.2 gequetscht wird.

Fig. 10 zeigt ein weiteres Ausführungsbeispiel einer erfindungsgemäßen Schlauchverbindung. Das Anschlussstück 2 umfasst einen ersten Ring 3.1 sowie einen Anschlagring 8. Zwischen beiden sind Ringe 3.3 mit halbrundem Querschnitt angeordnet. Allgemein handelt es sich bei den Ringen 3.3 um Ringe mit einem kreisbogenförmigen oder ellipsenbogenförmigen Querschnitt. Der nicht dargestellte Schlauch wird mittels dreier Kerben 17, die in die Schlauchhülse 13 eingebracht sind, verquetscht. Im vorliegenden Ausführungsbeispiel ist ein Ring 3.3 im Bereich einer Kerbe 17, hier der dem Anschlagring 8 zugewandte Ring 3.3 angeordnet. Ebenso können aber auch beide Ringe 3.3 im Bereich einer Kerbe 17 angeordnet sein oder beide Ringe außerhalb von Kerben angeordnet sein. Ebenso kann die Anzahl der Ringe 3.3 und die Anzahl der Kerben 17 variiert werden.

### Bezugszeichenliste

- 1: Hydraulikleitung
- 2: Anschlussstück
- 3: Ring
- 3.1: Erster Ring
- 3.2: Weiterer Ring
- 4: Vorderseite
- 5: (entfällt)
- 6: der Vorderseite abgewandte Seite
- 7, 7.1, 7.2: Kante
- 8: Anschlagring
- 9: der Vorderseite abgewandte Seite
- 10: Kegelförmige Außenfläche
- 11: Rotationsachse
- 12: Ringnut
- 13: Schlauchhülse
- 14: Bohrung
- 15: Hohlzylindrischer Teil
- 16: Lochblende
- 17: Kerbe

## Patentansprüche

1. Rohrleitung (1) mit einem Anschlussstück (2) zur Verbindung der Rohrleitung (1) mit einem Schlauch, wobei das Anschlussstück (2) mindestens einen ersten im Längsschnitt trapezförmigen Ring (3.1) sowie einen Anschlagring (8) umfasst, **dadurch gekennzeichnet, dass** zwischen dem ersten Ring (3.1) und dem Anschlagring (8) mindestens ein weiteres Mittel (3.2, 12) zur Herstellung einer form- oder kraftschlüssigen Verbindung zwischen Schlauch und Anschlussstück (2) angeordnet ist.

2. Rohrleitung nach Anspruch 1, **dadurch gekennzeichnet, dass** zusätzlich mindestens ein weiteres Mittel (3.2, 12) zur Herstellung einer form- oder kraftschlüssigen Verbindung zwischen Schlauch und Anschlussstück (2) zwischen dem ersten Ring (3.1) und einer Vorderkante (4) der Rohrleitung (1) angeordnet ist.

3. Rohrleitung nach Anspruch 1 oder 2, **dadurch gekennzeichnet, dass** das weitere Mittel (3.2, 12) einen Bereich des Anschlussstücks mit gestuftem Außendurchmesser umfasst.

4. Rohrleitung nach einem der Ansprüche 1 bis 3, **dadurch gekennzeichnet, dass** das weitere Mittel ein Ring (3.2) ist, dessen größter Außendurchmesser (D₃) kleiner als der größte Außendurchmesser (D₂) des ersten Ringes (3.1) ist.

5. Rohrleitung nach einem der Ansprüche 1 bis 3, **dadurch gekennzeichnet, dass** das weitere Mittel ein Ring (3.3) mit einem kreisbogenförmigen oder ellipsenbogenförmigen Querschnitt ist.

6. Rohrleitung nach einem der Ansprüche 1 bis 3, **dadurch gekennzeichnet, dass** das weitere Mittel eine Ringnut (12) ist.

7. Rohrleitung nach Anspruch 5 oder 6, **dadurch gekennzeichnet, dass** das weitere Mittel sowohl mindestens einen Ring (3.2), dessen größter Außendurchmesser (D₃) kleiner als der größte Außendurchmesser (D₂) des ersten Ringes (3.1) ist, umfasst als auch mindestens eine Ringnut (12) umfasst.

8. Anschlussstück (2) zur Verbindung einer Rohrleitung (1) mit einem Schlauch, wobei das Anschlussstück (2) mindestens einen ersten im Längsschnitt trapezförmigen Ring (3.1) sowie einen Anschlagring (8) umfasst, **dadurch gekennzeichnet, dass** zwischen dem ersten Ring (3.1) und dem Anschlagring (8) mindestens ein weiteres Mittel (3.2, 12) zur Herstellung einer form- oder kraftschlüssigen Verbindung zwischen Schlauch und Anschlussstück (2) angeordnet ist.
